# EUROPEAN PATENT SPECIFICATION

(11) **EP 0 843 956 B1**
(45) Date of publication and mention of the grant of the patent: **02.01.2002**
(21) Application number: 97203547.1
(22) Date of filing: 14.11.1997
(51) Int. Cl.: A01B 1/00, A01B 59/042, B60D 1/46

(54) **Towing device for a tractor and the like**
Kupplungsvorrichtung für Schlepper o. dgl.
Dispositif d'accouplement pour tracteur ou similaire

(30) Priority: 15.11.1996 IT MI962386
(43) Date of publication of application: 27.05.1998
(73) Proprietor: Costruzioni Meccaniche G. Grassi di Luigi Grassi & C. S.n.c., 27010 Albuzzano (Pavia) (IT)
(72) Inventor: Grassi, Gabriele, 27010 Albuzzano (Pavia) (IT)
(74) Representative: Perani, Aurelio

(56) References cited:
- EP-A- 0 155 338
- EP-A- 0 388 363
- EP-A- 0 401 404
- EP-A- 0 446 598
- EP-A- 0 667 252

## Description

The present invention relates to a towing device, for a tractor and the like, of the type comprising a guide secured to a rear portion of the tractor, a hitch carried by a slide slidably mounted in the guide in order to carry the hitch to a predetermined height in accordance with the height of a towing eye of a vehicle to be towed, at least one gudgeon pin movably guided in the slide from a projecting position, in which it engages in a housing of a plurality of housings distributed along the guide, and a retracted position, in which it is disengaged from the housing, and control means acting on the at least one gudgeon pin in order to move it from the projecting position into the retracted position. Such device is known e.g. from EP-A-0 155 338.

In towing devices, it is necessary to adjust the height of the hitch in order to render it substantially the same as the height of the towing eye of the agricultural vehicle to be towed.

This is effected by releasing the slide relative to the guide, moving it vertically, as required, and relocking it.

The known mechanisms put forward for this purpose, while being satisfactory from various points of view and being widely used, are structurally complex and are subject to jamming owing to the ever likely incursion of foreign particles, such as earth, pieces of wood and the like. Protective screens have been suggested, but these have rendered the device even more complex to the point that it would seem desirable to return to the old and simple pin which is gripped directly in order to remove it and put it back on again by way of the slide and the guide every time it is necessary to adjust the height of the slide and keep it in position at that height.

The problem underlying the present invention is to provide a towing device of the type specified which has structural and functional characteristics capable of overcoming the above disadvantage.

The problem is solved by a towing device of the type specified which is characterised in that the control means comprise a sleeve which extends coaxially with the at least one gudgeon pin and which is mounted rotatably and is held axially on the slide, and also a coupling substantially of the male and female type formed between the sleeve and the at least one gudgeon pin, a substantially splined coupling being formed between the at least one gudgeon pin and the slide.

Other characteristics and the advantages of the towing device according to the present invention will become clear from the following description of its preferred embodiment, given purely by way of non-limiting example, with reference to the appended drawings, in which:

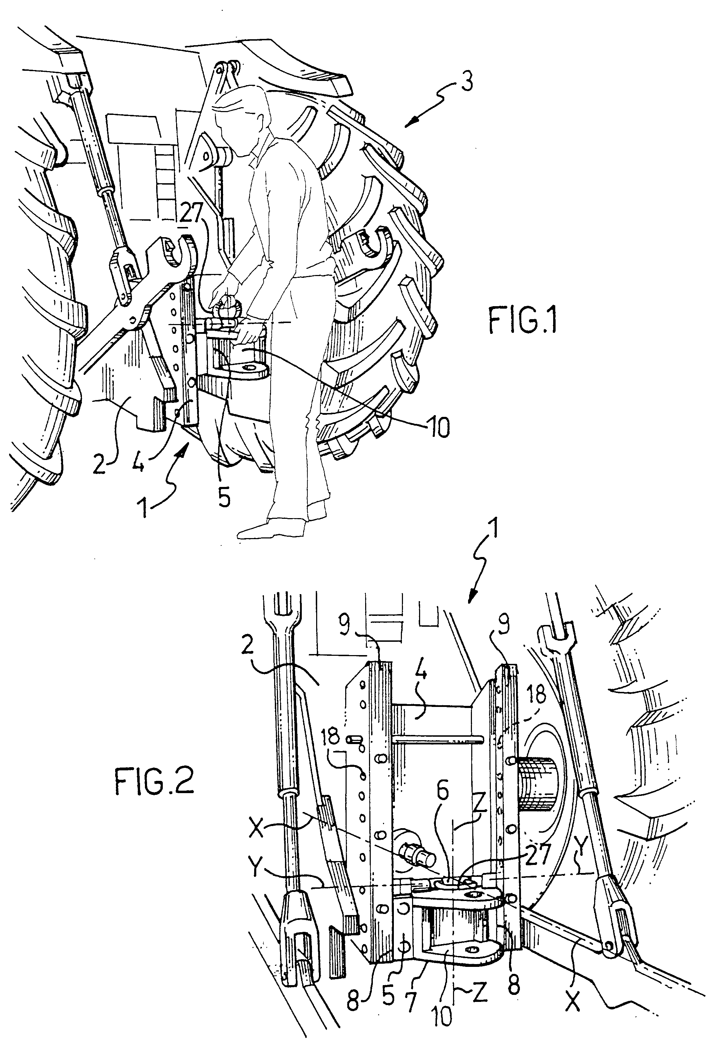

- Figure 1 is a perspective view of a tractor incorporating the towing device according to the invention,
- Figure 2 is a view on an enlarged scale of the towing device of Figure 1,

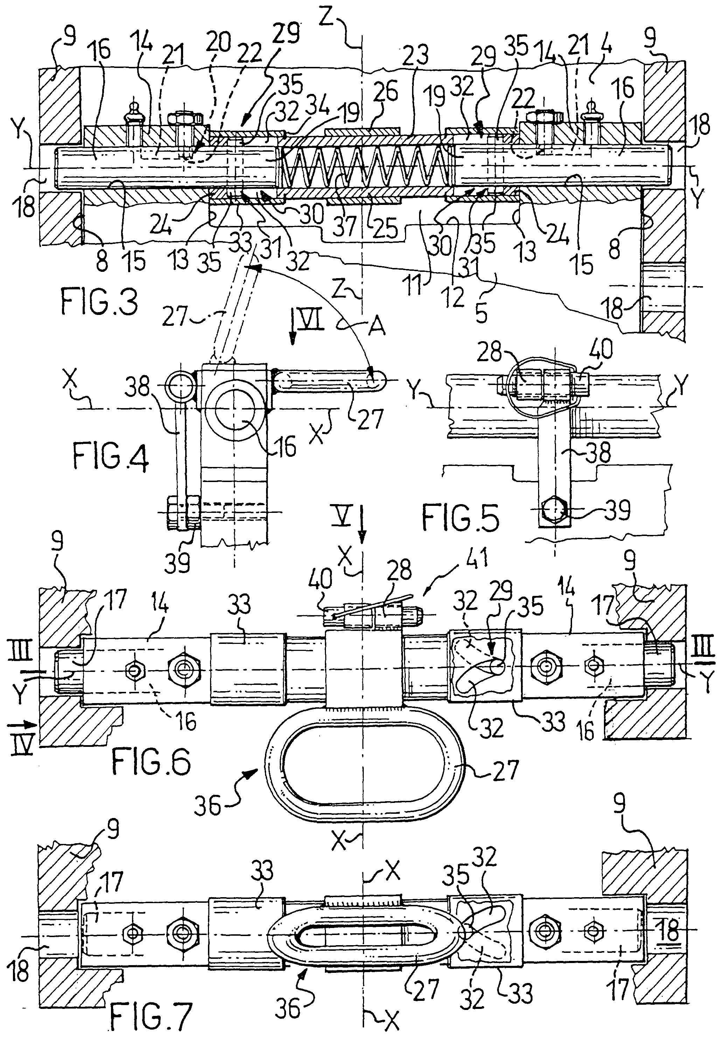

- Figure 3 is a partially sectional elevation of a detail of the towing device of Figure 1 on the line III-III,
- Figure 4 is a side elevation of a detail of the device of Figure 1 in accordance with the arrow IV,
- Figure 5 is a rear elevation of a detail of the device of Figure 1 in accordance with the arrow V,
- Figure 6 is a plan view of a detail of the device of Figure 1 in accordance with the arrow VI, and
- Figure 7 is a partially sectional plan view of a detail of the device of Figure 1 at a different stage of its operation.

Referring to the appended drawings, a towing device applied to a rear portion 2 of a tractor 3 having a horizontal longitudinal axis X-X is generally indicated 1.

The towing device 1 comprises a guide 4 and a slide 5. The guide 4 is secured to the rear portion 2 and extends in a vertical direction Z-Z. The slide 5 is in the form of a rectangular plate arranged perpendicularly to the longitudinal axis X-X of the tractor and has an upper horizontal side 6, a lower horizontal side 7 and opposing vertical sides both indicated 8.

It should be mentioned that the device 1 which will be described hereinafter is symmetrical relative to a vertical plane passing through the axis X-X.

The slide 5 is slidably mounted in the guide 4, the side portions 9 of which enclose and hold the sides 8.

A hitch 10 of the so-called "wolf's mouth" type is carried by the lower side 7 of the slide 5 and is capable of receiving a towing eye of an agricultural vehicle and the like, not shown in the drawing.

In the area of the upper side 6, the slide 5 has a central cutaway portion 11 which is delimited by a base 12 and by opposing shoulders 13 and which defines in the slide two opposing lugs 14 which are traversed by respective holes 15 having a horizontal transverse axis Y-Y.

Two opposing gudgeon pins 16 are movably guided in the holes 15 between a projecting position in which one end 17 of each gudgeon pin projects from the respective side 8 of the slide 5 and a retracted position in which the end 17 has returned into the hole 15.

When it is in the projecting position, the end 17 of each gudgeon pin 16 engages selectively with a housing 18 selected from a plurality of housings 18 distributed along each portion 9 of the guide 4.

Each gudgeon pin 16 has an end 19 which is opposite the end 17 and which extends in a cantilevered manner in the cutaway portion 11.

A substantially splined coupling 20 is formed between each gudgeon pin 16 and the respective lug 14 in such a manner as to prevent the gudgeon pin from rotating in the hole. The coupling 20 is formed by a recess 21 formed axially along the gudgeon pin and by a projection 22 carried by the lug.

A sleeve 23 has opposite ends 24 placed on the ends 19 of the gudgeon pins so that it is supported rotatably on the slide. The opposite ends 24 of the sleeve also abut the shoulders 13 axially in such a manner that the sleeve is held axially on the slide.

A bush 26 carrying a ring-shaped handle 27 and an eye 28 is secured in the area of a central portion 25 of the sleeve 23.

A coupling 29 substantially of the male and female type is formed between each end 24 of the sleeve 23 and the end 19 of the respective gudgeon pin 16. One of the couplings 29 is right-handed and the other is left-handed, so that a rotation of the sleeve about the axis Y-Y, in one sense or the other, causes both of the gudgeon pins to move simultaneously from the projecting position into the retracted position or vice versa. In other words, the couplings 29 are also structurally symmetrical relative to the vertical plane passing through the longitudinal axis X-X, like the entire device.

Each coupling 29 comprises a female portion 30 formed in the sleeve and a male portion 31 formed in the gudgeon pin.

In particular, the female portion 30 is formed by two helical grooves 32 in the wall of the sleeve. It should be noted that a protective bush 33 is placed on the sleeve over at least an end portion thereof on which the grooves 32 are formed and is held in position by a stop ring 34.

The male portion 31 is formed by two diametrically opposite studs 35 which project radially from the gudgeon pin and each of which is in engagement with a respective groove 32. For the sake of simplicity, the two studs 35 are the ends of a pin held captive in the gudgeon pin transversely thereto.

The handle 27, which is arranged above the hitch 10, is movable manually between a substantially horizontal position, when the gudgeon pins are in their projecting position, and a substantially sub-vertical position, when the gudgeon pins are in their retracted position. Preferably, the angle formed between those positions, marked A, is between 60° and 90° and is preferably 75°.

The sleeve 23 with the couplings 29 substantially of the male and female type constitute control means 36 for moving the gudgeon pins 16 between the projecting position, in which they engage in respective housings 18 in order to keep the slide locked in the guide at the desired height, and the return position, in order to release the slide and to enable it to move vertically so that the height of the hitch can be adjusted.

A spring 37 is provided between the gudgeon pins 16 and constantly urges the gudgeon pins to move apart from one another, that is to say, towards their projecting positions, so that the control means 36 act in opposition to the spring 37. The spring 37 promotes the return of the handle from the sub-vertical position to the horizontal position.

When the slide is locked in the guide, and the handle is in the horizontal position, a connecting rod 38, which has one end pivoted on a fixed pin 39 carried by the slide 5 in the area of the base 12 of the cutaway portion 11, holds, with an opposite end, the eye 28 by means of a shear pin 40, which is manually removable. The connecting rod 38 and the shear pin 40 constitute a means of safety 41 against undesired incorrect operation of the handle following accidental knocks by foreign bodies.

The main advantage of the towing device according to the present invention resides in its unusual reliability, being completely resistant to the incursion of foreign particles.

It is also structurally simple and sturdy and it can therefore be expected to have a long service life.

Finally, the device is ergonomically favourable because it is readily operated by the user. The action performed by the user with one hand, for example with his right hand, on the handle in order to move the gudgeon pins into the return position, and the action performed by the user with his other hand directly on the slide are both directed upwards with the common purpose of overcoming the weight of the slide during the adjustment of the height of the hitch.

## Claims

1. A towing device (1), for a tractor (3) and the like, of the type comprising a guide (4), secured to a rear portion (2) of the tractor (3), a hitch (10) carried by a slide (5) slidably mounted in the guide (4) in order to carry the hitch (10) to a predetermined height in accordance with the height of a towing eye of a vehicle to be towed, at least one gudgeon pin (16) movably guided in the slide (5) from a projecting position, in which it engages in a housing (18) of a plurality of housings (18) distributed along the guide (4), and a retracted position, in which it is disengaged from the housing (18), and control means (36) acting on the at least one gudgeon pin (16) in order to move it from the projecting position into the retracted position, **characterised in that** the control means (36) comprise a sleeve (23) which extends coaxially with the at least one gudgeon pin (16) and which is mounted rotatably and is held axially on the slide (5), and also a coupling (29) substantially of the male and female type formed between the sleeve (23) and the at least one gudgeon pin (16), a substantially splined coupling (20) being formed between the at least one gudgeon pin (16) and the slide (5).

2. A towing device (1) according to Claim 1, **characterised in that** there are two gudgeon pins (16) and they are arranged in the area of the opposite ends (24) of the sleeve (23) and are coupled to the sleeve (23) by respective couplings (29) of the male and female type, one right-handed and one left-handed, respectively.

3. A towing device (1) according to Claim 2, **characterised in that** it comprises a handle (27) fixedly joined to the sleeve (23) for the rotation thereof.

4. A towing device (1) according to Claim 3, **characterised in that** the handle (27) extends in a substantially horizontal position when the gudgeon pins (16) are in the projecting position.

5. A towing device (1) according to Claim 4, **characterised in that** the handle (27) extends in a substantially sub-vertical position when the gudgeon pins (16) are in the retracted position.

6. A towing device (1) according to Claim 5, **characterised in that** the positions form an angle (A) of between 60° and 90° and preferably an angle of 75°.

7. A towing device (1) according to Claim 2, **characterised in that** each coupling (29) of the male and female type comprises a female portion (30) formed in the sleeve (23) and a male portion (31) formed in the gudgeon pin (16).

8. A towing device (1) according to Claim 7, **characterised in that** the female portion (30) is formed by two helical grooves (32) in the sleeve (23).

9. A towing device (1) according to Claim 8, **characterised in that** the male portion (31) is formed by two studs (35) which project from the gudgeon pin (16) and each of which is in engagement with a respective helical groove (32) of the sleeve (23).

10. A towing device (1) according to Claim 9, **characterised in that** it comprises a safety means (41) for maintaining the handle (27) in the substantially horizontal position.

## Patentansprüche

1. Kupplungsvorrichtung (1) für einen Schlepper (3) und dgl. der Art, die umfasst: eine Führung (4), die an einem hinteren Teil (2) des Schleppers (3) befestigt ist, eine Anhängekupplung (10), die von einem Gleitstück (5) getragen ist, das verschiebbar in der Führung (4) montiert ist, um die Anhängekupplung (10) in eine vorbestimmte Höhe in Übereinstimmung mit der Höhe einer Schleppöse eines zu schleppenden Fahrzeugs zu bewegen, zumindest einen Einsetzstift (16), der zwischen einer vorstehenden Position, in der er in ein Gehäuse (18) einer Vielzahl von Gehäusen (18) eingreift, die längs der Führung (4) verteilt sind, und einer zurückgezogenen Position, in der er außer Eingriff mit dem Gehäuse (18) steht, in dem Gleitstück (5) bewegbar geführt ist, und ein Steuermittel (36), das auf den zumindest einen Einsetzstift (16) einwirkt, um ihn aus der vorstehenden Position in die zurückgezogene Position zu bewegen, dadurch **gekennzeichnet,** dass das Steuermittel (36) umfasst: eine Muffe (23), die sich koaxial mit dem zumindest einen Einsetzstift (16) erstreckt und die drehbar montiert und axial auf dem Gleitstück (5) gehalten ist, und außerdem eine Kupplung (29) im wesentlichen des Innenteil- und Außenteiltyps, die zwischen der Muffe (23) und dem zumindest einen Einsetzstift (16) gebildet ist, und eine im wesentlichen keilnutverzahnte Kupplung (20), die zwischen dem zumindest einen Einsetzstift (16) und dem Gleitstück(5) gebildet ist.

2. Kupplungsvorrichtung (1) nach Anspruch 1, **dadurch gekennzeichnet, dass** es zwei Einsetzstifte (16) gibt und diese in dem Bereich der einander entgegengesetzten Enden (24) der Muffe (23) angeordnet und durch jeweilige Kupplungen (29) des Innenteil- und Außenteiltyps, eine auf der rechten und eine auf der linken Seite, mit der Muffe (23) verbunden sind.

3. Kupplungsvorrichtung (1) nach Anspruch 2, **dadurch gekennzeichnet , dass** sie einen Griff (27) umfasst, der zur Drehung der Muffe (23) fest mit dieser verbunden ist.

4. Kupplungsvorrichtung (1) nach Anspruch 3, **dadurch gekennzeichnet , dass** sich der Griff (27) in einer im wesentlichen horizontalen Stellung erstreckt, wenn sich die Einsetzstifte (16) in der vorstehenden Position befinden.

5. Kupplungsvorrichtung (1) nach Anspruch 4, **dadurch gekennzeichnet , dass** sich der Griff (27) in einer im wesentlichen subvertikalen Stellung erstreckt, wenn sich die Einsetzstifte (16) in der zurückgezogenen Position befinden.

6. Kupplungsvorrichtung (1) nach Anspruch 5, **dadurch gekennzeichnet , dass** die Stellungen einen Winkel (A) von zwischen 60° und 90° und vorzugsweise einen Winkel von 75° bilden.

7. Kupplungsvorrichtung (1) nach Anspruch 2, **dadurch gekennzeichnet , dass** jede Kupplung (29) des Innenteil- und Außenteiltyps umfasst: einen Außenteil (30), der in der Muffe (23) gebildet ist, und einen Innenteil (31), der in dem Einsetzstift (16) gebildet ist.

8. Kupplungsvorrichtung (1) nach Anspruch 7, **dadurch gekennzeichnet , dass** der Außenteil (30) durch zwei wendelförmige Nuten (32) in der Muffe (23) gebildet ist.

9. Kupplungsvorrichtung (1) nach Anspruch 8, **dadurch gekennzeichnet , dass** der Innenteil (31) durch zwei Stege (35) gebildet ist, die von dem Einsetzstift (16) vorstehen, und jeder davon in Eingriff mit einer jeweiligen wendelförmigen Nut (32) der Muffe (23) steht.

10. Kupplungsvorrichtung (1) nach Anspruch 9, **dadurch gekennzeichnet , dass** sie ein Sicherungsmittel (41) zum Halten des Griffs (27) in der im wesentlichen horizontalen Stellung umfasst.

## Revendications

1. Dispositif de remorquage (1), pour un tracteur (3) et similaire, du type comprenant un guide (4), fixé à une partie arrière (2) du tracteur (3), un attelage (10) supporté par un coulisseau (5) monté de manière coulissante dans le guide (4) afin de supporter l'attelage (10) à une hauteur prédéterminée conformément à la hauteur d'un anneau d'attelage d'un véhicule à remorquer, au moins une broche d'assemblage (16) guidé de manière mobile dans le coulisseau (5) entre une position étendue, dans laquelle elle s'engage dans un logement (18) d'une pluralité de logements (18) répartis le long du guide (4), et une position rétractée, dans laquelle elle est dégagée du logement (18), et des moyens de commande (36) agissant sur ledit au moins une broche d'assemblage (16) afin de la déplacer de la position étendue à la position rétractée, **caractérisé en ce que** les moyens de commande (36) comprennent un manchon (23) qui s'étend coaxialement avec ladite au moins une broche d'assemblage (16) et qui est monté de manière rotative et maintenu axialement sur le coulisseau (5), et également un accouplement (29) sensiblement du type mâle et femelle formé entre le manchon (23) et ladite au moins une broche d'assemblage (16), un accouplement essentiellement à cannelures (20) étant formé entre ladite au moins une broche d'assemblage (16) et le coulisseau (5).

2. Dispositif de remorquage (1) selon la revendication 1, **caractérisé en ce qu'**il y a deux broches d'assemblages (16) et **en ce qu'**elles sont agencées dans la zone des extrémités opposées (24) du manchon (23) et sont couplées au manchon (23) par des accouplements respectifs (29) du type mâle et femelle, respectivement un à droite et un à gauche.

3. Dispositif de remorquage (1) selon la revendication 2, **caractérisé en ce qu'**il comprend une poignée (27) reliée de manière fixe au manchon (23) pour la rotation de celui-ci.

4. Dispositif de remorquage (1) selon la revendication 3, **caractérisé en ce que** la poignée (27) s'étend dans une position sensiblement horizontale lorsque les broches d'assemblage (16) sont dans la position étendue.

5. Dispositif de remorquage (1) selon la revendication 4, **caractérisé en ce que** la poignée (27) s'étend dans une position sensiblement sub-verticale lorsque les broches d'assemblage (16) sont dans la position rétractée.

6. Dispositif de remorquage (1) selon la revendication 5, **caractérisé en ce que** les positions forment un angle (A) compris entre 60° et 90° et, de préférence, un angle de 75°.

7. Dispositif de remorquage (1) selon la revendication 2, **caractérisé en ce que** chaque accouplement (29) du type mâle et femelle comprend une partie femelle (30) formée dans le manchon (23) et une partie mâle (31) formée dans la broche d'assemblage (16).

8. Dispositif de remorquage (1) selon la revendication 7, **caractérisé en ce que** la partie femelle (30) est formée par deux gorges hélicoïdales (32) aménagées dans le manchon (23).

9. Dispositif de remorquage (1) selon la revendication 8, **caractérisé en ce que** la partie mâle (31) est formée par deux tenons (35) en saillie de broche d'assemblage (16) et chacun en prise avec une gorge hélicoïdale respective (32) du manchon (23).

10. Dispositif de remorquage (1) selon la revendication 9, **caractérisé en ce qu'**il comprend des moyens de sécurité (41) pour maintenir la poignée (27) dans la position sensiblement horizontale.
